# EUROPÄISCHE PATENTSCHRIFT

(11) **EP 2 481 335 B1**
(45) Veröffentlichungstag und Bekanntmachung des Hinweises auf die Patenterteilung: **07.08.2019**
(21) Anmeldenummer: 12150639.8
(22) Anmeldetag: 10.01.2012
(51) Int. Cl.: A47L 15/42, D06F 58/20, D06F 39/12, D06F 39/00, F24C 15/08

(54) **Einbau-Haushaltsgerät, insbesondere Geschirrspülmaschine**
Built-in household appliance, in particular dishwasher
Appareil ménager encastré, notamment lave-vaisselle

(30) Priorität: 31.01.2011 DE 102011003412; 02.02.2011 DE 102011003541
(43) Veröffentlichungstag der Anmeldung: 01.08.2012
(73) Patentinhaber: BSH Hausgeräte GmbH, 81739 München (DE)
(72) Erfinder: Kiechle, Franz, 89312 Günzburg (DE); Rehm, Karlheinz, 89561 Dischingen (DE)

(56) Entgegenhaltungen:
- DE-U- 7 534 416
- FR-A1- 2 919 258
- US-A- 5 895 189
- US-A1- 2007 207 012

## Beschreibung

Die Erfindung betrifft ein Einbauhaushaltsgerät, insbesondere eine Geschirrspülmaschine, mit mindestens einer längenverstellbaren Abstandshülse zum Befestigen des Einbauhaushaltsgeräts an zumindest einer Wandung, insbesondere einer Möbelwand, mittels einer Befestigungsschraube, wobei die Abstandshülse ein an dem Einbauhaushaltsgerät gelagertes, erstes Hülsenteil und ein teleskopartig dazu verstellbares, zweites Hülsenteil aufweist, welches mit Bezug auf das erste Hülsenteil bis in Anlage mit der Wandung, insbesondere der Möbelwand, entlang einer Achse längenverstellbar ist.

Einbauhaushaltsgeräte, wie zum Beispiel Geschirrspülmaschinen, werden nach dem Einsetzen zum Beispiel in Einbaunischen von Küchenmöbeln beispielsweise über Haltebleche oder Haltewinkelelemente an angrenzenden Möbelwänden seitlich verschraubt.

Die Druckschrift DE 75 34 416 U offenbart eine Vorrichtung zum Befestigen eines Einbaugeräts in einem Gehäuse, insbesondere eines Einbaukühlschrankes in einer Nische eines Anbaumöbels für eine Küche oder dergleichen, mit mindestens einem die Wand des Einbaugeräts durchdringenden und wenigstens annähernd senkrecht gegen die Wand des Gehäuses vortreibbaren Schraubenbolzen. Der in einer in der Wand des Einbaugeräts eingelassenen Gewindebuchse sitzende Schraubenbolzen weist eine axiale Durchgangsbohrung zur Aufnahme einer mit einem Holzgewinde ausgestatteten und einen Schaft aufweisenden Befestigungsschraube auf. Der eine Spitze aufweisende Schaft ist durch den Schraubenbolzen in die Wand einschraubbar. Die Durchgangsbohrung kann abgesetzt sein und sie kann an dem der Wand zugekehrten Ende des Schraubenbolzens einen geringeren Durchmesser aufweisen als an ihrem innenliegenden Ende. Weiterhin kann die mit dem Holzgewinde ausgestattete Schraube als Senkschraube mit einem dem Bohrungsabschnitt mit dem größeren Durchmesser entsprechenden Kopf und einem dem Durchmesser des abgesetzten Bohrungsabschnitts an dem der Wand zugekehrten Ende des Schraubenbolzens entsprechenden Schaft ausgebildet sein. Ferner kann der Übergang des abgesetzten Abschnitts der Durchgangsbohrung des Schraubenbolzens dem Kopf der Senkschraube entsprechend mit einer Schräge ausgebildet sein.

Zur Befestigung des Einbauhaushaltsgeräts an der Seitenwand des Anbaumöbels wird zunächst der Schraubenbolzen durch Ansetzen eines Schraubenziehers drehbetätigt, wodurch der Schraubenbolzen in der Geräteseitenrichtung ein- oder ausgefahren wird, bis dessen Stirnseite in Anlage mit der Seitenwand des Anbaumöbels ist. In einem zweiten Arbeitsschritt wird dann die Befestigungsschraube in die Durchgangsbohrung des Schraubenbolzens eingeführt und in die Möbelwand eingeschraubt.

Die Druckschrift US 2007/0207012 A1 offenbart eine toleranzausgleichende Befestigungsvorrichtung, umfassend ein mit einem Gewinde versehenes Befestigungselement, ein äußeres Element mit einer Befestigungsbohrung und ein rohrförmiges Element mit einer Innenfläche, welche drehbar mit dem Gewindebefestigungselement verbunden ist, und mit einer Außenfläche, welche drehbar mit der Montagebohrung des äußeren Elements gekoppelt ist, so dass das rohrförmige Element um eine Mittelachse des rohrförmigen Elements synchronisiert mit der Drehung des mit dem Gewinde versehenen Befestigungselements in Bezug auf das äußere Element in einer von dem äußeren Element vorstehenden Richtung bewegt wird und dann das Gewindebefestigungselement anschließend in Bezug auf das rohrförmige Element bei weiterer Drehung des Gewindebefestigungselements rotiert. Das rohrförmige Element weist eine Werkzeugeingriffsstruktur auf, welche an einem ersten axialen Endabschnitt eine Oberfläche des rohrförmigen Teils ausbildet, wobei die Werkzeugeingriffsstruktur radial zwischen der äußeren Oberfläche und der inneren Oberfläche des rohrförmigen Elements beabstandet ist.

Eine Aufgabe der Erfindung besteht darin, ein Einbauhaushaltsgerät mit verbesserter Möglichkeit zur Lagesicherung an mindestens einer Wandung, insbesondere einer Einbaunische, bevorzugt einer Nische eines Einbaumöbels oder eines Möbelstücks, eine zugehörige längenverstellbare Abstandshülse sowie eine Vorrichtung beziehungsweise Anordnung zum Befestigen eines Einbauhaushaltsgeräts an mindestens einer Wandung, insbesondere einer Möbelwand einer Einbaunische bereitzustellen, bei der die Längenverstellung der Abstandshülse zur Überwindung eines zwischen dem Einbauhaushaltsgerät und der jeweiligen Wandung, insbesondere der jeweiligen Möbelwand, vorhandenen Spalts montagetechnisch vereinfacht ist.

Erfindungsgemäß ist eine Verdrehsicherung vorgesehen, welche eine Drehbewegung des zweiten Hülsenteils in Bezug zu dem ersten Hülsenteil um die Achse begrenzt, wobei die Verdrehsicherung an dem ersten Hülsenteil und an dem zweiten Hülsenteil zueinander korrespondierende Stirnseiten aufweist, welche einander in Axialrichtung zugewandt sind. Somit wird die Montage wesentlich vereinfacht, da durch das Ansetzen einer Befestigungsschraube ein Drehmoment auf das zweite Hülsenteil übertragen wird, diese jedoch durch die Verdrehsicherung begrenzt wird und somit ein Fortsetzen der Montage durch Fortsetzen der Einschraubbewegung der Befestigungsschraube zur endgültigen Fixierung der Abstandshülse fortgesetzt werden kann.

Das zweite Hülsenteil kann für eine mit Bezug auf das erste Hülsenteil erfolgende Längenverstellung der Abstandshülse zweckmäßigerweise einen Mitnehmerabschnitt aufweisen. Die Befestigungsschraube kann beim Einsetzen in die Abstandshülse gegen diesen Mitnehmerabschnitt anstoßen. Im weiteren Montageverlauf kann daher die Befestigungsschraube über den Mitnehmerabschnitt bewegungsgekoppelt mit dem zweiten Hülsenteil verschoben werden, bis das zweite Hülsenteil in Anlage mit der jeweiligen Wandung der Einbaunische, insbesondere der jeweiligen Möbelwand des Einbaumöbelstücks, gebracht ist. Es erfolgt also eine Längenverstellung des zweiten Hülsenteils automatisch mit dem Einsetzen der Befestigungsschraube in das zweite Hülsenteil, wodurch sich der Montageaufwand beim Befestigen des Einbauhaushaltsgeräts an mindestens einer Wandung, insbesondere beim Einbau des Einbauhaushaltsgeräts in die jeweilige Einbaunische reduziert.

Die beiden Hülsenteile der Abstandshülse können zweckmäßigerweise zueinander teleskopartig verstellbar sein, um den zwischen dem Einbauhaushaltsgerät und der Möbelwand befindlichen Spalt zu überbrücken. In diesem Fall können die beiden Hülsenteile in Axialrichtung zueinander verschiebbar angeordnet sein. Beispielhaft kann das längsverstellbare Hülsenteil innerhalb des vorzugsweise ortsfest an dem Einbauhaushaltsgerät gehalterten ersten Hülsenteils teleskopartig verschiebbar aufgenommen sein. Der Mitnehmerabschnitt kann dabei an einer Stirnseite des zweiten Hülsenteils ausgebildet sein. Die Befestigungsschraube kann daher beim Einsetzen in die Abstandshülse mit ihrer Schraubenspitze gegen die Stirnseite des Hülsenteils anstoßen und somit das zweite Hülsenteil zur Möbelwand verschieben.

Alternativ kann der Mitnehmerabschnitt ein durchmesserreduzierter Abschnitt in einer Durchgangsbohrung des zweiten Hülsenteils sein. Auf diese Weise wird das zweite Hülsenteil zunächst mit der Schraubenspitze der Befestigungsschraube gegen die Möbelwand gedrückt. Anschließend kann die Befestigungsschraube durch den durchmesserreduzierten Abschnitt der Durchgangsbohrung geschraubt werden, und zwar bis in Schraubeingriff mit der Möbelwand. Alternativ dazu kann der Mitnehmerabschnitt die Durchgangsbohrung des zweiten Hülsenteils in Axialrichtung vollständig verschließen. In diesem Fall ist der Mitnehmerabschnitt so auszulegen, dass er beim Ansetzen der Befestigungsschraube durchbrochen werden kann.

Die beiden zueinander korrespondierenden Stirnseiten der Hülsenteileverlaufen in einer Weiterbildung der Erfindung mit einer vorgegebenen Steigung helixförmig, insbesondere schraubenlinienabschnittsförmig, in Umfangsrichtung um die beiden Hülsenteile herum. Dabei kann die Stirnseite des zweiten Hülsenteils an einer Ringschulter ausgebildet sein, welche einen Übergang zwischen einem durchmesserkleineren und einem durchmessergrößeren Außenabschnitt des zweiten Hülsenteils bildet. Der durchmesserkleinere Abschnitt des zweiten Hülsenteils kann teleskopartig verschiebbar innerhalb des ersten Hülsenteils angeordnet sein. Die Stirnseite des ersten Hülsenteils kann demgegenüber der Ringschulter zugewandt an dem ersten Hülsenteil ausgebildet sein.

Die Wirkungsweise dieser beiden helixförmig, insbesondere schraubenlinienabschnittsförmig, verlaufenden Stirnseiten der Hülsenteile ist nachfolgend erläutert: So erfolgt zunächst eine Längenverstellung des zweiten Hülsenteils in der Axialrichtung der Abstandshülse, wodurch die beiden korrespondierenden Ringflächen auseinander bewegt werden. Mit einer anschließenden Drehbewegung des zweiten Hülsenteils können dann zumindest Abschnitte der beiden helixförmigen Stirnseiten der Hülsenteile miteinander in Kontakt gebracht werden. In diesem Fall können sich die beiden Hülsenteile aufgrund der Keilwirkung zwischen beiden Hülsenteilen aufeinander abstützen. Dabei ist sicherzustellen, dass beim Einschrauben der Befestigungsschraube ein auf das zweite Hülsenteil aufgebrachtes Drehmoment größer ist als ein entgegenwirkendes Reibmoment, welches als Gegenmoment zwischen dem zweiten Hülsenteil und der Möbelseitenwand erzeugt wird.

Um dabei ein Abgleiten der zueinander keilförmig gestalteten Stirnseiten der Hülsenteile zu vermeiden, sind diese in beiden Hülsenteilen zweckmäßigerweise jeweils stufenförmig mit in Radialebene liegenden Radialflächen sowie in Axialebene liegenden Axialflächen ausgebildet. Auf diese Weise werden Schrägabschnitte in den Ringflächen vermieden, bei denen die Gefahr einer nachträglichen unbeabsichtigten Drehbewegung besteht.

Die Abstandshülse kann insbesondere zwischen dem Schraubenkopf der Befestigungsschraube und der Möbelwand eingespannt sein. Hierzu kann der Schraubenkopf der Befestigungsschraube auf der von dem zweiten Hülsenteil abgewandten Seite des ersten Hülsenteils, etwa in einer darin ausgebildeten Einsenkung, abgestützt sein. Bevorzugt kann dabei zwischen dem ersten Hülsenteil der Abstandshülse und dem Schraubenkopf der Befestigungsschraube ein Öffnungsrandbereich einer Montageöffnung einer Wandung, insbesondere Seitenwand, eines Nutzraumbehälters des Einbauhaushaltsgeräts eingespannt sein. In diesem Fall kann somit die Befestigungsschraube, ausgehend von dem Innenraum des Nutzraumbehälters des Einbauhaushaltsgeräts, nach außen in die jeweilige Wandung, insbesondere in die jeweilige Möbelwand, eingeschraubt werden.

Ferner gehört zur Erfindung eine längenverstellbare Abstandshülse zum Befestigen eines Einbauhaushaltsgeräts, insbesondere einer Geschirrspülmaschine, nach Anspruch 12 sowie eine Anordnung zum Befestigen eins Einbauhaushaltsgeräts an mindestens einer Wandung, insbesondere einer Einbaunische, bevorzugt einer Nische eines Einbaumöbels oder Möbelstücks, nach Anspruch 13.

Die vorstehend erläuterten und/oder in den abhängigen Ansprüchen wiedergegebenen vorteilhaften Aus- und Weiterbildungen der Erfindung können dabei - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen, jeweils in einer schematischen Prinzipskizze:
- Fig. 1: in einer vergrößerten Seitenschnittdarstellung ein Ausführungsbeispiel einer nach dem erfindungsgemäßen Konstruktionsprinzip ausgebildeten Abstandshülse in einer Einbaulage, in der ein Einbauhaushaltsgerät an der Möbelwand einer Einbaunische befestigt ist; sowie
- Fig. 2 bis 4: jeweils unterschiedliche Raumansichten, welche eine Längenverstellung der Abstandshülse von Fig. 1 bei der Montage des Einbauhaushaltsgeräts in der Einbaunische veranschaulichen.

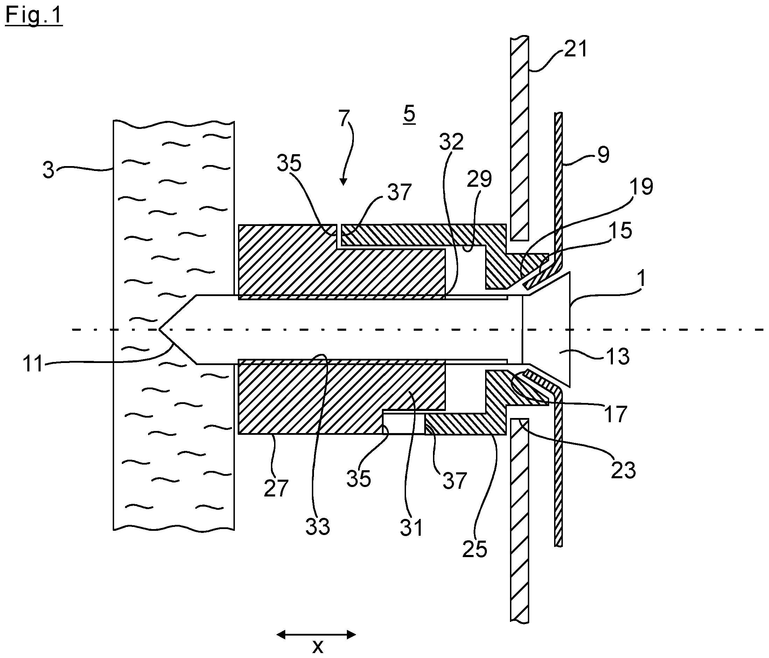

Elemente mit gleicher Funktion und Wirkungsweise sind in den Figuren 1 mit 4 jeweils mit denselben Bezugszeichen versehen.

In der Fig. 1 ist stark vergrößert eine Einbausituation gezeigt, bei der ein Einbauhaushaltsgerät, wie zum Beispiel eine Geschirrspülmaschine, in eine Einbaunische eingesetzt ist. In der Einbaunische sind die Seiten des Einbauhaushaltsgeräts in einer Geräteseitenrichtung x (Doppelpfeil) mittels Befestigungsschrauben 1 an jeweils seitlich angrenzende Möbelseitenwände 3 verschraubt, von denen in der Fig. 1 lediglich eine Möbelseitenwand 3 gezeigt ist. Vor der Verschraubung wird das Einbauhaushaltsgerät zunächst lagerichtig zwischen den beiden Möbelseitenwänden 3 positioniert, wodurch jeweils links- sowie rechtsseitig Spalte 5 entstehen, welche mittels einer Abstandshülse 7 überbrückt werden. Mittels der beiden seitlichen Abstandshülsen 7 kann das Einbauhaushaltsgerät in der Geräteseitenrichtung x (Doppelpfeil) zentriert zwischen den beiden Möbelseitenwänden 3 der Einbaunische gehalten werden.

Die in der Fig. 1 gezeigte Abstandshülse 7 ist zwischen der Möbelseitenwand 3 und einer Außenseite der Nutzraumwand 9 des Einbauhaushaltsgeräts abgestützt. Durch die Abstandshülse 7 ist außerdem die Befestigungsschraube 1 geführt, welche mit ihrer Schraubenspitze 11 in der Möbelseitenwand 3 verschraubt ist. Die Befestigungsschraube 1 ist außerdem durch eine in einem Einzug 15 gebildete Montageöffnung 17 der Nutzraumwand 9 geführt. Entsprechend ist der im vorliegenden Ausführungsbeispiel als Senkkopf ausgebildete Schraubenkopf 13 der Befestigungsschraube 1 unter Zwischenlage des Durchzugs 15 der Nutzraumwand 9 in einer korrespondierenden Einsenkung 19 der Abstandshülse 7 abgestützt. Die Befestigungsschraube 1 kann daher ausgehend von der Innenseite des Nutzraumbehälters montiert beziehungsweise demontiert werden.

Wie aus der Fig. 1 weiter hervorgeht, ist außerhalb der Nutzraumwand 9 als ein Halteelement 21 ein umlaufender Tragrahmen vorgesehen, welcher zur Versteifung des hier nicht gezeigten Nutzraumbehälters vorgesehen ist. Im Falle einer Geschirrspülmaschine ist der umlaufende Tragrahmen 21 in dem Bereich der frontseitigen Beschickungsöffnung des Nutzraumbehälters angeordnet. In dem umlaufenden Rahmen 21 ist eine Durchführungsöffnung 23 vorgesehen, durch die die Abstandshülse 7 bis zur Außenseite der Nutzraumwand 9 geführt ist.

Erfindungsgemäß ist die im vorliegenden Ausführungsbeispiel aus Kunststoff hergestellte Abstandshülse 7 längenverstellbar ausgebildet, wodurch eine Anpassung an unterschiedliche Spaltbreiten zwischen dem Einbauhaushaltsgerät und der Möbelseitenwand 3 ermöglicht ist. Hierzu weist die Abstandshülse 7 zwei zueinander teleskopartig verschiebbare Hülsenteile 25, 27 auf. Das erste Hülsenteil 25 ist dabei mit seiner in der Fig. 1 gezeigten linken Stirnseite unmittelbar an der Nutzraumwand 9 abgestützt. An seiner von der Nutzraumwand 9 abgewandten Seite weist das erste Hülsenteil 25 einen Führungsabschnitt 29 auf, in den ein Führungszylinder 31 des zweiten Hülsenteils 27 einragt. Der Innendurchmesser des Führungsabschnitts 29 und der Außendurchmesser des Führungszylinders 31 des zweiten Hülsenteils 27 sind derart aufeinander abgestimmt, dass eine Längsverstellung des zweiten Hülsenteils 27 in Richtung einer Achse I ermöglicht ist.

Wie aus der Fig. 1 weiter hervorgeht, weist das zweite Hülsenteil 27 eine Durchgangsbohrung 33 auf, welche im Vergleich zu dem Schraubendurchmesser der Befestigungsschraube 1 reduziert ist. Beim Einschrauben der Befestigungsschraube 3 schneidet daher die Befestigungsschraube 1 selbsttätig einen Innengewindegang in die Durchgangsbohrung 33 des zweiten Hülsenteils 27. Das zweite Hülsenteil 27 weist außerdem eine umlaufende Ringschulter 35 auf, welche in Axialrichtung einer Stirnseite 37 des ersten Hülsenteils 25 zugewandt ist. In der Fig. 1 sind die Ringschulter 35 des zweiten Hülsenteils 27 und die Stirnseite 37 des ersten Hülsenteils 25 oberhalb der Schraubenachse aufeinander abgestützt, wodurch ein Einfahren des Führungszylinders 31 in den Führungsabschnitt 29 des ersten Hülsenteils 25 unterbunden ist.

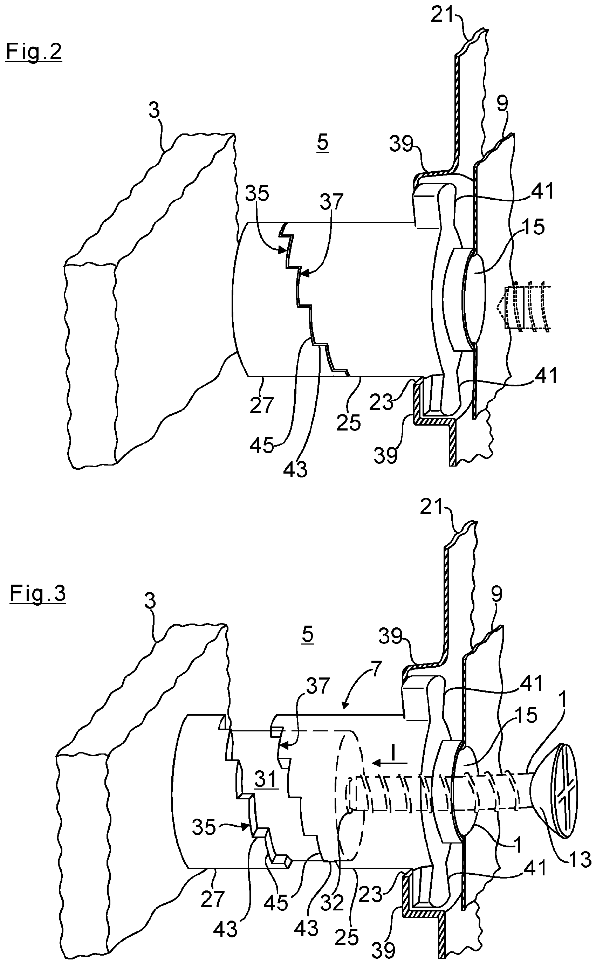

Anhand der folgenden Fig. 2 bis 4 wird der Vorgang zur Befestigung des Einbauhaushaltsgeräts an der Möbelseitenwand 3 erläutert. So ist in der Fig. 2 die Abstandshülse 7 mit in axialer Richtung eingefahrenem zweiten Hülsenteil 27 gezeigt. Die Abstandshülse 7 ist mit ihrem ersten Hülsenteil 25 an dem umlaufenden Rahmen 21 vorpositioniert. Die Befestigungsschraube 1 ist im gezeigten Vormontagezustand noch nicht durch die Abstandshülse 7 geführt.

Zur Vorpositionierung der Abstandshülse weist der umlaufende Rahmen 21 in dem Bereich seiner Durchgangsöffnung 23 abgestellte Rastlaschen 39 auf, welche nach Art einer Bajonettverbindung von seitlich abragenden Flügeln 41 des ersten Hülsenteils 25 hintergriffen werden können. Auf diese Weise kann die Abstandshülse 7 mit Bezug auf die Montageöffnung 17 in der Nutzraumwand 9 zentriert werden. Gemäß der Fig. 2 ist die Abstandshülse 7 noch über einen freien Abstand von der Möbelseitenwand 3 beabstandet.

In der Fig. 3 ist die Befestigungsschraube 1 teilweise in der Abstandshülse 7 eingesetzt dargestellt. Bei diesem Einsetzvorgang stößt die Schraubenspitze 11 in Richtung der axialen Achse I gegen den stirnseitigen Öffnungsrandbereich 32 der Durchgangsbohrung 33 des zweiten Hülsenteils 27. Der Öffnungsrandbereich 32 mit reduziertem Durchmesser fungiert somit als ein Mitnehmerabschnitt, mittels dem die Befestigungsschraube 1 das zweite Hülsenteil 27 in einer Schubbewegung in Richtung der Achse I bis in Anlage mit der Möbelseitenwand 3 verstellt.

Zusätzlich ist sicherzustellen, dass nach erfolgter Längenverstellung der Abstandshülse 7 ein Rückstellen des zweiten Hülsenteils 27 in das erste Hülsenteil 25 hinein unterbunden wird. Hierzu verlaufen die Ringschulter 35 des zweiten Hülsenteils 27 sowie die zugewandte Stirnseite 37 des ersten Hülsenteils 25 zueinander korrespondierend helixförmig in Umfangsrichtung. Sowohl die Ringschulter 35 als auch die Stirnseite 37 sind stufenförmig mit in einer Radialebene liegenden Radialflächen 43 sowie mit in einer Axialebene liegenden Axialflächen 45 ausgebildet. Die jeweilige Axialfläche 45 ist bei Blick auf die Außenmantelfläche des jeweiligen Hülsenteils insbesondere eine sich in Umfangsrichtung erstreckende Stufenfläche. Vorzugsweise ist sie diejenige Stufenfläche, auf der die axiale Richtung I oder die axiale Zentralachse der beiden Hülsenteile 25, 27 der Abstandshülse 7 eine Flächennormale bildet. Sie verläuft in der von der Radialrichtung und Umfangsrichtung der Abstandshülse 7 aufgespannten Ebene als Kreisringabschnitt oder Torusabschnitt. Die jeweilige Radialfläche 43 ist zur jeweilig benachbarten, das heißt angrenzenden Axialfläche 45 vorzugsweise quer, insbesondere senkrecht verlaufend. Sie erstreckt sich bei Blick auf die Außenmantelfläche des jeweiligen Hülsenteils vorzugsweise im Wesentlichen parallel zur axialen Richtung I. Die jeweilige Radialfläche 43 ergibt sich jeweils durch einen Freischnitt durch die etwa kreiszylindrische Mantelfläche des jeweiligen Hülsenteils 25, 27 der Abstandshülse 7 in radialer Richtung und liegt somit im Wesentlichen parallel zu dieser. Sie ist vorzugsweise in erster Näherung durch die axiale Richtung I sowie durch die radiale Richtung oder Radialachse der beiden kreiszylinderförmig ausgebildeten Hülsenteile 25, 27 der Abstandshülse 7 aufgespannt. An ihrem Umfangsort an der Mantelfläche des jeweiligen Hülsenteils bildet eine dort angelegte Tangente ihre Flächennormale. Die Radialflächen 43 zumindest des einen Hülsenteils wie zum Beispiel 25 können gegenüber der axialen Richtung gegebenenfalls auch geneigt sein. Insbesondere können sie jeweils eine positive Steigung ausgehend von dem dem anderen Hülsenteil wie zum Beispiel 27 zugewandten Ende des Hülsenteils wie zum Beispiel 25 aufweisen. Dadurch lässt sich eine verbesserte Verhakung der beiden Hülsenteile aneinander beim Verdrehen der beiden Hülsenteile gegeneinander in Umfangsrichtung erreichen. Bei frontseitiger Kontaktierung, das heißt Zusammenschieben der beiden Hülsenteile kann zusätzlich eine gewisse Klemmwirkung der beiden Teile aneinander bereitgestellt werden. Dies kann beispielsweise im Vormontagezustand zum Beispiel für den Transport der beiden Hülsenteile günstig sein, so dass sie nicht ungewollt auseinanderfallen und verloren gehen können. Die Radialflächen 43 und die Axialflächen 45 wechseln aufeinanderfolgend ab und bilden somit eine Stufenstruktur. Selbstverständlich ist es auch möglich, die Radial- und Axialflächen 43, 45 der beiden Hülsenteile 25, 27 so abzuwandeln, dass diese anstelle von senkrecht zueinander stehenden Flächen andere zueinander quer stehende Flächen bilden, welche dennoch eine Verrastung der beiden Hülsenteile 25, 27 in Umfangsrichtung gegeneinander ermöglichen, das heißt verallgemeinert ausgedrückt eine Verdrehsicherung bewirken, wenn die beiden Hülsenteile 25, 27 gegeneinander in Umfangsrichtung verdreht werden. Im in der Fig. 3 gezeigten Montagezustand sind die Radial- und Axialflächen 43, 45 der ersten und zweiten Hülsenteile 25, 27 voneinander in Richtung der Achse I beabstandet.

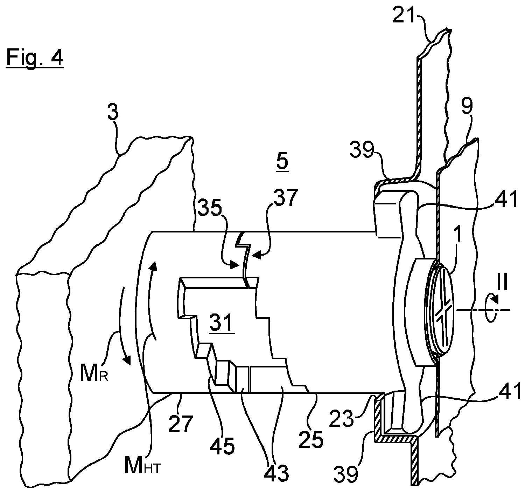

Im weiteren Montageverlauf wird die gemäß der Fig. 3 bereits an dem Öffnungsrandbereich 32 anstoßende Befestigungsschraube 1 durch die Durchgangsbohrung 33 des zweiten Hülsenteils 27 geschraubt, wobei gemäß Vorbeschreibung die Befestigungsschraube 1 ein Innengewinde in die Durchgangsbohrung 33 des zweiten Hülsenteils 27 einschneidet. Dabei erfolgt automatisch eine Drehbewegung II des zweiten Hülsenteils 27 mit Bezug auf das erste Hülsenteil 25, wie es in der Fig. 4 gezeigt ist, um die Zentralachse der beiden Hülsenteile. Durch diese Drehbewegung II wird die Ringschulter 35 des zweiten Hülsenteils 27 mit ihren Radial- und Axialflächen 43, 45 zumindest teilweise wieder in Anlage gebracht mit korrespondierenden Radial- und Axialflächen 43, 45 des ersten Hülsenteils 25, wie es in der Fig. 4 gezeigt ist. Auf diese Weise erfolgt aufgrund der Drehbewegung II des zweiten Hülsenteils 27 eine Verriegelung, mit der ein Einfahren des zweiten Hülsenteils 27 in das erste Hülsenteil 25 unterbunden ist.

### Bezugszeichenliste

- 1: Befestigungsschraube
- 3: Möbelseitenwand
- 5: Spalt
- 7: Abstandshülse
- 9: Nutzraumwand
- 11: Schraubenspitze
- 13: Schraubenkopf
- 15: Einzug
- 17: Montageöffnung
- 19: Einsenkung
- 21: Halteelement
- 23: Durchgangsöffnung
- 25: Erstes Hülsenteil
- 27: Zweites Hülsenteil
- 29: Führungsabschnitt
- 31: Führungszylinder
- 32: Mitnehmerabschnitt
- 33: Durchgangsbohrung
- 35: Ringschulter
- 37: Stirnseite
- 39: Rastlasche
- 41: Flügel
- 43: Radialfläche
- 45: Axialfläche

- I: Achse
- II: Drehbewegung
- M_{R}: Reibmoment
- M_{HT}: Drehmoment
- x: Geräteseitenrichtung (Doppelpfeil)

## Patentansprüche

1. Einbauhaushaltsgerät, insbesondere Geschirrspülmaschine, mit mindestens einer längenverstellbaren Abstandshülse (7) zum Befestigen des Einbauhaushaltsgeräts an zumindest einer Wandung, insbesondere einer Möbelwand (3), mittels einer Befestigungsschraube (1), wobei die Abstandshülse (7) ein an dem Einbauhaushaltsgerät gelagertes, erstes Hülsenteil (25) und ein teleskopartig dazu verstellbares, zweites Hülsenteil (27) aufweist, welches mit Bezug auf das erste Hülsenteil (25) bis in Anlage mit der Wandung, insbesondere der Möbelwand (3), entlang einer Achse (I) längenverstellbar ist, **dadurch gekennzeichnet, dass** eine Verdrehsicherung vorgesehen ist, welche eine Drehbewegung (II) des zweiten Hülsenteils (27) um die Achse (I) begrenzt, und dass die Verdrehsicherung an dem ersten Hülsenteil (25) und an dem zweiten Hülsenteil (27) zueinander korrespondierende Stirnseiten (35, 37) aufweist, welche einander in Axialrichtung zugewandt sind.

2. Einbauhaushaltsgerät nach Anspruch 1, **dadurch gekennzeichnet, dass** die Stirnseiten (35, 37) der beiden Hülsenteile (25, 27) jeweils helixförmig, insbesondere schraubenlinienabschnittsartig, in Umfangsrichtung verlaufen.

3. Einbauhaushaltsgerät nach Anspruch 1 oder 2, **dadurch gekennzeichnet, dass** die Stirnseiten (35, 37) der beiden Hülsenteile (25, 27) nach dem Längenverstellen außer Anlage sind und dass sie durch die Drehbewegung (II) des zweiten Hülsenteils (27) wieder in Anlage bringbar sind.

4. Einbauhaushaltsgerät nach Anspruch 1, 2 oder 3, **dadurch gekennzeichnet, dass** die Drehbewegung (II) des zweiten Hülsenteils (27) mit dem Einschrauben einer Befestigungsschraube (1) in einen Mitnehmerabschnitt (32) des zweiten Hülsenteils (27) erfolgt.

5. Einbauhaushaltsgerät nach einem der vorhergehenden Ansprüche, **dadurch gekennzeichnet, dass** ein beim Einschrauben einer Befestigungsschraube (1) auf das zweite Hülsenteil (27) aufgebrachtes Drehmoment (M_{HT}) größer ist als ein entgegenwirkendes Reibmoment (M_{R}) zwischen dem zweiten Hülsenteil (27) und einer Wandung, insbesondere einer Möbelwand, bevorzugt einer Möbelseitenwand (3).

6. Einbauhaushaltsgerät nach einem der vorhergehenden Ansprüche, **dadurch gekennzeichnet, dass** die Stirnseiten (35, 37) der beiden Hülsenteile (25, 27) stufenförmig mit in einer Radialebene liegenden Radialflächen (43) und in einer Axialebene liegenden Axialflächen (45) ausgebildet sind.

7. Einbauhaushaltsgerät nach einem der vorhergehenden Ansprüche, **dadurch gekennzeichnet, dass** ein Schraubenkopf (13) einer jeweilig in die Abstandshülse (7) einzuführenden Befestigungsschraube (1) auf der von dem zweiten Hülsenteil (27) abgewandten Seite des ersten Hülsenteils (25), insbesondere in einer Einsenkung (19), abstützbar ist.

8. Einbauhaushaltsgerät nach einem der vorhergehenden Ansprüche, **dadurch gekennzeichnet, dass** zwischen dem ersten Hülsenteil (25) und einem Schraubenkopf (11) ein Öffnungsrandbereich (15) einer Montageöffnung (17) einer Wandung, insbesondere einer Seitenwand (9), eines Nutzraumbehälters des Einbauhaushaltsgeräts eingespannt ist.

9. Einbauhaushaltsgerät nach Anspruch 8, **dadurch gekennzeichnet, dass** das Einbauhaushaltsgerät an der Außenseite mindestens einer Nutzraumbehälterwand (9) ein Halteelement (21), im Falle einer Geschirrspülmaschine einen Rahmen, aufweist, in dem die jeweilige Abstandshülse (7) gegenüber der Montageöffnung (17) vorpositionierbar ist.

10. Einbauhaushaltsgerät nach Anspruch 8 oder 9, **dadurch gekennzeichnet, dass** der Schraubenkopf (13) der jeweilig in die Abstandshülse einzuschraubenden Befestigungsschraube (1) an dem Übergang zu dem Schraubengewinde der Befestigungsschraube (1) mit einer Ringfläche ausgebildet ist, welche flüssigkeitsdicht mit dem korrespondierenden Öffnungsrandbereich (15) der Montageöffnung (17) der jeweiligen Wandung, insbesondere Seitenwand (9), des Nutzraumbehälters des Einbauhaushaltsgeräts ist.

11. Einbauhaushaltsgerät nach einem der vorhergehenden Ansprüche, **dadurch gekennzeichnet, dass** im Falle einer Geschirrspülmaschine an einem Rahmen, welcher frontseitig an den beiden Seitenwandungen und der Deckenwandung der Beschickungsöffnung des Spülbehälters der Geschirrspülmaschine vorgesehen ist, das erste Hülsenteil (25) mit angeformt ist, insbesondere materialeinheitlich und/oder einstückig mit angeformt ist.

12. Längenverstellbare Abstandshülse (7) zum Befestigen eines Einbauhaushaltsgeräts nach einem der vorhergehenden Ansprüche 1 bis 11, insbesondere einer Geschirrspülmaschine, an mindestens einer Wandung, insbesondere einer Einbaunische, bevorzugt einer Nische eines Einbaumöbels oder Möbelstücks, mit einem, insbesondere an dem Einbauhaushaltsgerät lagerbaren, ersten Hülsenteil (25) und einem teleskopartig dazu entlang einer Achse (I) verstellbaren, zweiten Hülsenteil (27), **dadurch gekennzeichnet, dass** eine Verdrehsicherung vorgesehen ist, welche eine Drehbewegung (II) des zweiten Hülsenteils (27) um die Achse (I) begrenzt, und dass die Verdrehsicherung an dem ersten Hülsenteil (25) und an dem zweiten Hülsenteil (27) zueinander korrespondierende Stirnseiten (35, 37) aufweist, welche einander in Axialrichtung zugewandt sind.

13. Anordnung zur Befestigung eines Einbauhaushaltsgeräts nach einem der vorhergehenden Ansprüche 1 bis 11 an mindestens einer Wandung, insbesondere einer Einbaunische, bevorzugt einer Nische eines Einbaumöbels oder Möbelstücks, mit mindestens einer längenverstellbare Abstandshülse (7), welche ein, insbesondere an dem Einbauhaushaltsgerät lagerbares, erstes Hülsenteil (25) und ein teleskopartig dazu entlang einer Achse (I) verstellbares, zweites Hülsenteil (27) aufweist, **dadurch gekennzeichnet, dass** eine Verdrehsicherung vorgesehen ist, welche eine Drehbewegung (II) des zweiten Hülsenteils (27) um die Achse (I) begrenzt, und dass die Verdrehsicherung an dem ersten Hülsenteil (25) und an dem zweiten Hülsenteil (27) zueinander korrespondierende Stirnseiten (35, 37) aufweist, welche einander in Axialrichtung zugewandt sind.

## Claims

1. Built-in household appliance, in particular dishwasher, having at least one length-adjustable spacing sleeve (7) for fixing the built-in household appliance to at least one wall, in particular a furniture wall (3), by means of a fixing bolt (1), wherein the spacing sleeve (7) has a first sleeve part (25) mounted on the built-in household appliance and a telescopically adjustable second sleeve part (27) that is length-adjustable in relation to the first sleeve part (25) until it comes into contact with the wall, in particular the furniture wall (3), along an axis (I), **characterised in that** an anti-twist element is provided that restricts a rotational movement (II) of the second sleeve part (27) around the axis (I), and **in that** on the first sleeve part (25) and on the second sleeve part (27) the anti-twist element has end faces (35, 37) that correspond to one another, which face one another in the axial direction.

2. Built-in household appliance according to claim 1, **characterised in that** the end faces (35, 37) of the two sleeve parts (25, 27) each extend in a helical shape, in particular in the manner of a section of helix, in the peripheral direction.

3. Built-in household appliance according to claim 1 or 2, **characterised in that** after the length adjustment the end faces (35, 37) of the two sleeve parts (25, 27) are not in contact and **in that** they can be brought into contact again by means of the rotational movement (II) of the second sleeve part (27).

4. Built-in household appliance according to claim 1, 2 or 3, **characterised in that** the rotational movement (II) of the second sleeve part (27) occurs when a fixing bolt (1) is screwed into a tappet section (32) of the second sleeve part (27).

5. Built-in household appliance according to one of the preceding claims, **characterised in that** a torque (MHT) applied to the second sleeve part (27) when a fixing bolt (1) is screwed in is greater than a counteracting friction torque (MR) between the second sleeve part (27) and a wall, in particular a furniture wall, preferably a furniture side wall (3).

6. Built-in household appliance according to one of the preceding claims, **characterised in that** the end faces (35, 37) of the two sleeve parts (25, 27) are embodied in a stepped arrangement with radial surfaces (43) lying in a radial plane and axial surfaces (45) lying in an axial plane.

7. Built-in household appliance according to one of the preceding claims, **characterised in that** a bolt head (13) of a fixing bolt (1) to be introduced in each case into the spacing sleeve (7) can bear against the side of the first sleeve part (25) facing away from the second sleeve part (27), in particular in a countersink (19).

8. Built-in household appliance according to one of the preceding claims, **characterised in that** an opening edge region (15) of an installation opening (17) in a wall, in particular a side wall (9), of a usable space container of the built-in household appliance is retained between the first sleeve part (25) and a bolt head (11).

9. Built-in household appliance according to claim 8, **characterised in that** on the outside of at least one usable space container wall (9) the built-in household appliance has a retaining element (21), in the case of a dishwasher a frame, in which the respective spacing sleeve (7) can be pre-positioned vis-à-vis the installation opening (17).

10. Built-in household appliance according to claim 8 or 9, **characterised in that** the bolt head (13) of the fixing bolt (1) to be screwed in each case into the spacing sleeve is embodied with a ring surface at the transition to the bolt thread of the fixing bolt (1), which ring surface is liquid-tight with the corresponding opening edge region (15) of the installation opening (17) in the respective wall, in particular side wall (9), of the usable space container of the built-in household appliance.

11. Built-in household appliance according to one of the preceding claims, **characterised in that** the first sleeve part (25) is moulded on together, in the case of a dishwasher onto a frame, which is provided on the front of the two side walls and the ceiling wall of the loading opening of the dishwasher cavity of the dishwasher, in particular is moulded on together in a single material and/or in a single piece.

12. Length-adjustable spacing sleeve (7) for fixing a built-in household appliance according to one of the preceding claims 1 to 11, in particular a dishwasher, to at least one wall, in particular an installation niche, preferably a niche in an item of built-in furniture or an item of furniture, having a first sleeve part (25), which in particular can be mounted on the built-in household appliance, and a telescopically adjustable second sleeve part (27) that is adjustable in relation thereto along an axis (I), **characterised in that** an anti-twist element is provided that restricts a rotational movement (II) of the second sleeve part (27) around the axis (I), and **in that** on the first sleeve part (25) and on the second sleeve part (27) the anti-twist element has end faces (35, 37) that correspond to one another, which face one another in the axial direction.

13. Arrangement for fixing a built-in household appliance according to one of the preceding claims 1 to 11 to at least one wall, in particular an installation niche, preferably a niche in an item of built-in furniture or an item of furniture, having at least one length-adjustable spacing sleeve (7) that has a first sleeve part (25), which in particular can be mounted on the built-in household appliance, and a telescopically adjustable second sleeve part (27) that is adjustable in relation thereto along an axis (I), **characterised in that** an anti-twist element is provided that restricts a rotational movement (II) of the second sleeve part (27) around the axis (I), and **in that** on the first sleeve part (25) and on the second sleeve part (27) the anti-twist element has end faces (35, 37) that correspond to one another, which face one another in the axial direction.

## Revendications

1. Appareil ménager encastré, en particulier lave-vaisselle, avec au moins une entretoise réglable en longueur (7) pour la fixation de l'appareil ménager encastré à au moins une paroi, en particulier à une paroi de meuble (3), au moyen d'une vis de fixation (1), dans lequel l'entretoise (7) présente une première partie d'entretoise (25) logée sur l'appareil ménager encastré et une deuxième partie d'entretoise (27) réglable de façon télescopique par rapport à la première, laquelle est réglable en longueur par rapport à la première partie d'entretoise (25) jusqu'à la butée avec la paroi, en particulier la paroi de meuble (3), le long d'un axe (I), **caractérisé en ce qu'**une sécurité antirotation est prévue, laquelle limite un mouvement rotatif (II) de la deuxième partie d'entretoise (27) autour de l'axe (I), et **en ce que** la sécurité antirotation présente sur la première partie d'entretoise (25) et sur la deuxième partie d'entretoise (27) des côtés frontaux correspondant l'un à l'autre (35, 37), dirigés l'un vers l'autre en direction axiale.

2. Appareil ménager encastré selon la revendication 1, **caractérisé en ce que** les côtés frontaux (35, 37) des deux parties d'entretoise (25, 27) s'étendent respectivement sous forme hélicoïdale, en particulier à la façon d'une section hélicoïdale, dans le sens circonférentiel.

3. Appareil ménager encastré selon la revendication 1 ou 2, **caractérisé en ce que** les côtés frontaux (35, 37) des deux parties d'entretoise (25, 27) sont, après le réglage en longueur, hors prise et **en ce qu'**elles peuvent à nouveau être placées en prise par le mouvement rotatif (II) de la deuxième partie d'entretoise (27).

4. Appareil ménager encastré selon la revendication 1, 2 ou 3, **caractérisé en ce que** le mouvement rotatif (II) de la deuxième partie d'entretoise (27) s'effectue par le vissage d'une vis de fixation (1) dans une section d'entraînement (32) de la deuxième partie d'entretoise (27).

5. Appareil ménager encastré selon l'une des revendications précédentes, **caractérisé en ce qu**'un couple de rotation (M_{HT}) appliqué à la deuxième partie d'entretoise (27) lors du vissage d'une vis de fixation (1) est supérieur à un couple de friction opposé (M_{R}) entre la deuxième partie d'entretoise (27) et une paroi, en particulier une paroi de meuble, de préférence une paroi latérale de meuble (3).

6. Appareil ménager encastré selon l'une des revendications précédentes, **caractérisé en ce que** les côtés frontaux (35, 37) des deux parties d'entretoise (25, 27) sont exécutés de façon étagée avec des surfaces radiales (43) se trouvant dans un plan radial et des surfaces axiales (45) se trouvant dans un plan axial.

7. Appareil ménager encastré selon l'une des revendications précédentes, **caractérisé en ce qu**'une tête de vis (13) d'une vis de fixation (1) respective à introduire dans l'entretoise (7) peut être étayée sur le côté de la première partie d'entretoise (25) éloignée de la deuxième partie d'entretoise (27), en particulier dans un enfoncement (19).

8. Appareil ménager encastré selon l'une des revendications précédentes, **caractérisé en ce qu'**une région de bord d'ouverture (15) d'un orifice de montage (17) d'une paroi, en particulier d'une paroi latérale (9), d'un contenant de volume utile de l'appareil ménager encastré est encastrée entre la première partie d'entretoise (25) et une tête de vis (11).

9. Appareil ménager encastré selon la revendication 8, **caractérisé en ce que** l'appareil ménager encastré présente sur le côté extérieur d'au moins une paroi de contenant de volume utile (9) un élément de retenue (21), un cadre dans le cas d'un lave-vaisselle, dans lequel l'entretoise (7) respective peut être prépositionnée en face de l'orifice de montage (17).

10. Appareil ménager encastré selon la revendication 8 ou 9, **caractérisé en ce que** la tête de vis (13) de la vis de fixation (1) respective à visser dans l'entretoise est exécutée, à la transition vers le filetage de vis de la vis de fixation (1), avec une surface annulaire étanche aux fluides avec la région de bord d'ouverture (15) correspondante de l'orifice de montage (17) de la paroi respective, en particulier la paroi latérale (9), du contenant de volume utile de l'appareil ménager encastré.

11. Appareil ménager encastré selon l'une des revendications précédentes, **caractérisé en ce que** dans le cas d'un lave-vaisselle, la première partie d'entretoise (25) est coformée, en particulier en un même matériau et/ou en une seule pièce, sur un cadre prévu côté frontal sur les deux parois latérales et sur la paroi supérieure de l'ouverture de chargement de la cuve de lavage du lave-vaisselle.

12. Entretoise réglable en longueur (7) pour la fixation d'un appareil ménager encastré selon l'une des revendications précédentes 1 à 11, en particulier d'un lave-vaisselle, sur au moins une paroi, en particulier une niche d'encastrement, de préférence une niche d'un meuble encastré ou d'un meuble, avec une première partie d'entretoise (25) pouvant en particulier être placée sur l'appareil ménager encastré et une deuxième partie d'entretoise (27) déplaçable de façon télescopique par rapport à la première le long d'un axe (I), **caractérisée en ce qu'**une sécurité antirotation est prévue, laquelle limite un mouvement rotatif (II) de la deuxième partie d'entretoise (27) autour de l'axe (I), et **en ce que** la sécurité antirotation présent sur la première partie d'entretoise (25) et sur la deuxième partie d'entretoise (27) des côtés frontaux (35, 37) correspondant l'un à l'autre, dirigés l'un vers l'autre en direction axiale.

13. Agencement pour la fixation d'un appareil ménager encastré selon l'une des revendications précédentes 1 à 11, sur au moins une paroi, en particulier une niche d'encastrement, de préférence une niche d'un meuble encastré ou d'un meuble, avec au moins une entretoise réglable en longueur (7) qui présente une première partie d'entretoise (25) pouvant en particulier être placée sur l'appareil ménager encastré et une deuxième partie d'entretoise (27) déplaçable de façon télescopique par rapport à la première le long d'un axe (I), **caractérisé en ce qu'** une sécurité antirotation est prévue, laquelle limite un mouvement rotatif (II) de la deuxième partie d'entretoise (27) autour de l'axe (I), et **en ce que** la sécurité antirotation présent sur la première partie d'entretoise (25) et sur la deuxième partie d'entretoise (27) des côtés frontaux (35, 37) correspondant l'un à l'autre, dirigés l'un vers l'autre en direction axiale.
